# EUROPEAN PATENT SPECIFICATION

(11) **EP 1 172 006 B1**
(45) Date of publication and mention of the grant of the patent: **18.01.2006**
(21) Application number: 00925986.2
(22) Date of filing: 14.04.2000
(51) Int. Cl.: H04N 7/24, H04N 5/00, H04N 7/16

(54) **METHOD AND SYSTEM FOR TARGETED OR UNIVERSAL UPGRADES OF PROGRAMMING IN A POPULATION OF ADVANCED SET-TOP BOXES IN A CABLE TELEVISION SYSTEM**
VERFAHREN UND SYSTEM FÜR GEZIELTE ODER UNIVERSALE AKTUALISIERUNGEN DER PROGRAMMIERUNG IN EINER POPULATION VERBESSERTER AUFSATZENDGERÄTE IN EINEM KABELFERNSEHSYSTEM
PROCEDE ET SYSTEME DE MISE A NIVEAU CIBLEE OU UNIVERSELLE DE LA PROGRAMMATION D'UNE POPULATION DE DECODEURS AVANCES DANS UN SYSTEME DE TELEVISION PAR CABLE

(30) Priority: 21.04.1999 US 130328 P; 07.04.2000 US 545678
(43) Date of publication of application: 16.01.2002
(73) Proprietor: GENERAL INSTRUMENT CORPORATION, Horsham, Pennsylvania 19044 (US)
(72) Inventor: POLI, Christopher, Doylestown, PA 18901 (US); DEL SORDO, Christopher, S., Souderton, PA 18964 (US); BIRNBAUM, Jack, M., Southampton, PA 18966 (US); MAKOFKA, Douglas, S., Willow Grove, PA 19090 (US); BATES, Thomas, F., IV, Richboro, PA 18954 (US); LEHRMAN, Ira, S., Littleton, CO 80122 (US)
(74) Representative: Bohnenberger, Johannes
(86) International application number: PCT/US2000/010015
(87) International publication number: WO 2000/064178

(56) References cited:
- EP-A- 0 907 285
- WO-A-97/30549
- WO-A-98/52355
- US-A- 5 440 632
- US-A- 5 666 293
- US-A- 5 734 589

## Description

### RELATED APPLICATIONS

This application claims priority from a previous U.S. provisional patent application entitled "Software and Firmware Initialization and Upgrade Management System and Method for an Advanced Set-Top Box in a Cable Television System," Serial No. 60/130,328, filed April 21, 1999.

### FIELD OF THE INVENTION

The present invention relates to the field of updating the programming, i.e., software or firmware, in a population of set-top terminals connected to a cable television system. More particularly, the present invention aims to provide a method and system by which the cable television system operator can remotely effect a universal upgrade of set-top terminal programming or a targeted upgrade of the programming in one or a defined group of set-top terminals.

### BACKGROUND OF THE INVENTION

In a typical cable television system, subscribers are provided with a set-top box or terminal. The set-top terminal is a box of electronic equipment that is used to connect the subscriber's television, and potentially other electronic equipment, with the cable network. The set-top box is usually connected to the cable network through a co-axial wall outlet.

The set-top box is essentially a computer that is programmed to process the signals from the cable network so as to provide the subscriber with the cable services. These services from the cable television company typically include access to a number of television channels and, perhaps, an electronic program guide. Additional premium channels may also be provided to subscribers at an additional fee. Pay-per-view events and video-on-demand may also be provided over the cable network. The set-top box is programmed to provide these and other services to the subscriber.

However, the services of the cable company need not be limited to providing television programming. Some cable companies are now offering internet access and e-mail over their cable networks at speeds much faster than are available over conventional telephone lines. It is anticipated in the future that more and more services will be provided over the cable network, including even basic telephone service. Eventually, each home or office may have a single connection, via the cable network, to all electronic data services.

When a new set-top terminal is added to the cable network, it must be initialized. To initialize a set-top terminal, the terminal must be provided with the programming required to allow it to function within the specific cable network to which it is connected and to thereby provide the services for which the subscriber has paid. Additionally, as the cable network and the services provided evolve, the set-top terminal must also evolve to be able to provide subscribers with all the services of the cable network This set-top box evolution will primarily involve changes to the programming, or perhaps a re-initialization, of the set-top box. By upgrading the soft- or firmware of the set-top box, the box can be made to perform more efficiently or offer new services as the cable network evolves.

In WO97/30549 and U.S. Patent No. 5,440,632, to initialize new set-top terminals or upgrade the programming in the existing population of set-top boxes on a cable network, it is preferable to transmit the necessary programming to the set-top boxes via the cable network itself. Otherwise, a technician must visit each subscriber to install or upgrade the set-top boxes. Such field installations and upgrades would obviously be at significant expense. The headend is the facility from which the cable network operator broadcasts television signals and provides other services over the cable network. Software that is provided to the population of set-top terminals could be broadcast from the headend over the cable network.

Consequently, there is a need in the art for a method and system that allow a cable television system operator to control a population of set-top terminal to appropriately accepted upgraded programming transmitted over the cable television system. Additionally, it must be noted that over time the population of set-top terminals will likely come to include different makes and models of set-top terminals with different capacities. The software required to upgrade each make and model of set-top terminal may therefore be different. Consequently, there is a need in the art for a method of initiating an upgrade of only those specific set-top terminals requiring an upgrade and of matching the proper programming code to the capabilities of those set-top terminals being upgraded.

### SUMMARY OF THE INVENTION

It is an object of the present invention to meet the above-described needs and others. Specifically, it is an object of the present invention to provide a method and system that allow a cable television system operator to control a population of set-top terminal to appropriately accepted upgraded programming transmitted over the cable television system. Additionally, it is a further object of the present invention to provide a method and system for initiating an upgrade of only those specific set-top terminals requiring an upgrade and for matching the proper programming code to the capabilities of those set-top terminals being upgraded.

Additional objects, advantages and novel features of the invention will be set forth in the description which follows or may be learned by those skilled in the art through reading these materials or practicing the invention. The objects and advantages of the invention may be achieved through the means recited in the attached claims.

To achieve these stated and other objects, the present invention may be embodied and described as a method and system for controlling an upgrade of programming in at least one set-top terminal connected to a cable television system, as defined in the independent claims 1 and 9, with preferred embodiments discussed in dependent claims thereof.

The method for controlling an upgrade of programming in at least one set-top terminal connected to a television system, wherein a set-top terminal (300) of said at least one set-top terminal has a hardware configuration, comprises: storing boot code within said set-top terminal.

Transmitting a plurality of base codes within a transport stream signal (322) of the cable television system. Identifying a set-top terminal specific base code, the specific boot code identifying the base code from the plurality of base codes. Retrieving the specific base code, the set-top terminal retrieving the specific base code from the plurality of base codes based upon the hardware configuration. Wherein the specific base code allows a user of said set-top terminal to watch broadcasts using the signal from the cable television system.

Transmitting one of an operating system and a resident application within the transport stream signal, the television system transmitting the one of the operating system and the resident application (6). Loading said one of the operating system and the resident application into the set-top terminal, the base code being executed to control the loading of the one of the operating system and the resident application.

The present invention also encompasses the physical system and hardware necessary to implement the method described above. For example, the present invention also encompasses a system for controlled upgrading of programming in a population of set-top terminals connected to a cable television system that includes; (1) means for transmitting an upgrade order and upgraded programming to the set-top terminals over the cable television system; (2) means for receiving the upgrade order and upgraded programming in each of the set-top terminals; and, in each set-top terminal, (3) means for controlling download and implementation of the upgraded programming by that set-top terminal in accordance with the upgrade order.

### BRIEF DESCRIPTION OF THE DRAWINGS

The accompanying drawings illustrate the present invention and are a part of the specification. Together with the following description, the drawings demonstrate and explain the principles of the present invention.
Fig. 1 is a block diagram illustrating the three different stages at which different programming packages have control of the set-top terminal during the initialization process of the present invention.
Fig. 2 is a flow chart illustrating the steps of the initialization process for a set-top terminal according to the present invention.
Fig. 3 is a block diagram of the various memory devices and some code objects used in a set-top box according to the present invention.
Fig. 4 is a flow chart illustrating the method of universally or specifically upgrading the programming in set-top terminals in a cable television system according to the present invention.

### DETAILED DESCRIPTION OF THE INVENTION:

The present invention addresses the problems involved in upgrading the programming in existing set-top boxes or initializing new set-top boxes using programming code broadcast over the cable network. As a result, the set-top boxes always have the code objects necessary to allow those set-top boxes to function optimally within the cable system and provide the services purchased by subscribers.

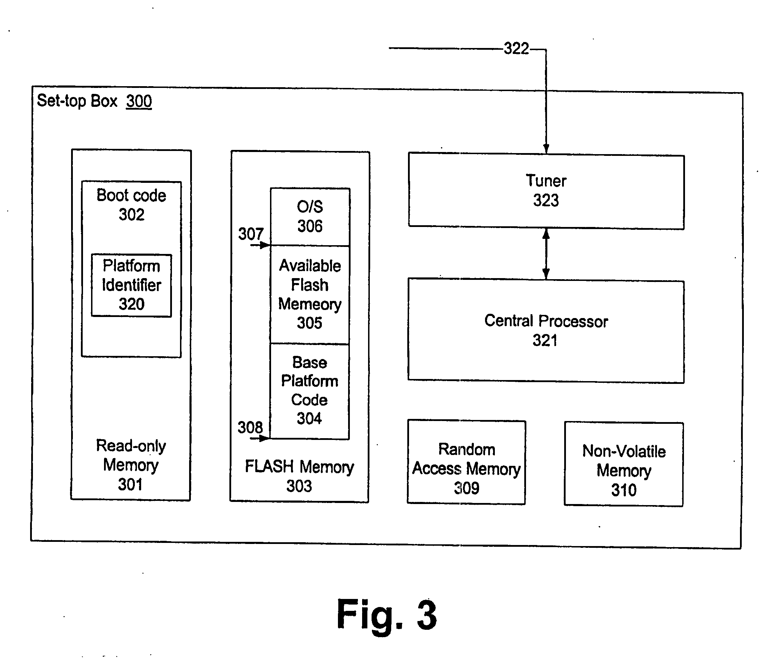

Stated in broad principle, the present invention aims to provide a set-top terminal architecture that includes a resident boot code object. As shown in Fig. 3, the boot code object (302) resides in the set-top terminal (300), preferably in read-only memory (ROM) (301) and can automatically execute and initialize or re-initialize the set-top terminal. The boot code will preferably be automatically executed by the central processor (321) of the set-top terminal. Execution of the boot code may be triggered by and immediately follow connection of power to the set-top terminal. The present invention may additionally require connection of the transport stream (322) signal from the cable system to a tuner (323) controlled by the processor (321) before execution of the boot code is triggered. Once the boot code is executing, no further action by the user/installer need be required. Moreover, no specific interaction is required between the headend and the set-top terminal that is initializing or booting.

As will be described in detail below, the boot code of the present invention will automatically find, download and begin execution of the correct software code object or objects needed to initialize or re-initialize the set-top terminal. The boot code will locate, identify and download the required programming from among potentially many code objects that might be multiplexed on the transport stream coming from the headend facility of the cable television system. The boot code recognizes the hardware configuration of the set-top terminal in which it resides via an internal ROM, protected Flash or other non-volatile memory coded identifier. This identifier is matched against a value carried in an object download locator message from the transport stream to insure that the boot code obtains and downloads objects appropriate to the set-top terminal in which the boot code is resident.

Functionally, the boot code of the present invention will identify an appropriate control channel frequency, find the stream of control data packets within that control channel, identify and download the correct object from among the objects on the transport stream, verify that the downloaded code is authorized and error-free, and start the downloaded code without direct assistance by a technician or intervention from the headend. The term "boot code" as used herein comprises the minimal code needed to accomplish this functionality.

There are essentially two distinct phases of programming a set-top box addressed by the present invention. The first is the initial programming of the set-top box. The second is upgrading the programming or re-initialization of the set-top box after that box has been placed in service.

The initial programming of the set-top box is often performed by the cable system operator after the set-top box has purchased from a manufacturer. Because each cable network is designed and built at different times by different service providers, each cable network may have a different design, architecture and code objects. Moreover, the specific services offered may vary among cable networks. Therefore, to adapt the set-top box to function within the specific environment of a service provider's cable system and to provide the specific group of services currently offered by that particular service provider, the set-top box must be programmed accordingly or "initialized."

The process of initialization of a set-top terminal according to the present invention will now be explained. In order for a set-top terminal to be initialized, i.e., accept and utilize the initial programming it receives, it must have some base programming that instructs it how to accept and use that initial programming. This base programming within the context of the present invention is called the boot code. As described above, the boot code is computer code resident in the permanent memory of the set-top terminal that is loaded, preferably into read-only memory, at the factory and cannot be changed once a terminal has been deployed.

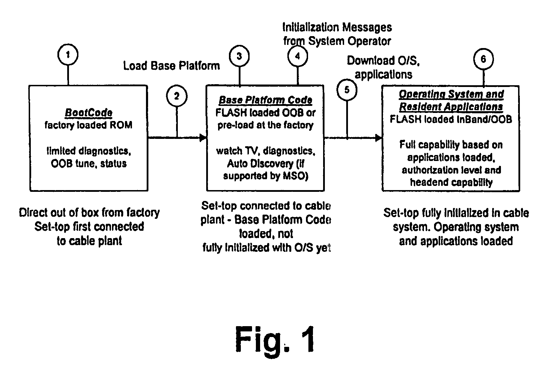

As shown in Fig. 1, there are three general tiers or classifications of programming that run on or have control of the set-top terminal during different stages in the initialization and operation of the terminal according to the present invention. Referring to Fig. 1, the first classification of code is the boot code (1). The boot code is preferably located in the read-only memory of the set-top terminal, but may alternatively be loaded in the Flash memory. While running the boot code (1), the set-top terminal cannot provide any services to the subscriber. The function (2) of the boot code (1) is to search the data transport stream received from the headend facility to locate, acquire and begin execution of the base platform code (3) which is the next tier or classification of programming.

The boot code (1) is designed to authenticate the base platform code after the base platform code is downloaded. The boot code (1) will preferably re-authenticate the base platform code every time it launches the base platform object (3). When the base platform code (3) is executing, the execution of the boot code (1) is terminated and control of the set-top terminal passes to the base platform code (3).

Under the principles of the present invention, the base platform code (3) is transmitted to the set-top terminal from the cable headend during the initialization of the terminal. This allows the operator of the cable system to customize the base platform code (3) for optimal operation on the specific cable system where the set-top terminal is deployed. Preferably, the base platform code (3) is transmitted over the cable plant on an out-of-band (OOB) transport stream. However, it is within the scope of the present invention for the base platform code (3) to be transmitted on an in-band control channel.

The base platform code (3) has two functions. The first function of the base platform code (3) is to provide the basic capability of allowing a subscriber to watch television using the signal from the cable television system. The second function is to control the download (5) of the next classification of code objects, i.e., the target operating system (O/S) and resident applications (6). The base platform code (3), while allowing subscribers to watch television, does not generally support any additional functions of the set-top terminal. However, the base platform code (3) can acquire, authenticate, authorize and execute objects of the third and final classification of programming (e.g., the O/S) (5).

The third classification of programming, the operating system and resident applications (6) provide the additional set-top terminal functions available from the cable system. The operating system (O/S) is typically code from a third party (such as Microsoft's WinCE™) that provides access, with the resident applications, to all authorized set-top terminal capabilities. The operating system typically uses an additional embedded code module provided by the manufacturer of the set-top terminal which interfaces the operating system with the particular hardware of that set-top terminal to enable the operating system to function with that specific set-top terminal.

Resident applications are computer programs that run on the set-top terminal under the operating system. The resident applications work with the operating system to provide the capabilities of the set-top terminal that are in addition to watching television. The native suite is a specified group of software applications, including the operating system and perhaps various resident applications, that provide the intended functions of the set-top terminal. Specific elements of the native suite are determined by the system operator.

As indicated in Figs. 1 and 3, the boot code (1) is preferably factory-loaded in the read-only memory (ROM) of the set-top terminal and is executed as soon as AC power is provided to the set-top terminal. Alternatively, the boot code may be executed in response to a reset signal (4) received, for example, from the headend, i.e., the system operator. This allows the system operator to re-initialize the set-top terminal whenever desired.

The reset signal (4) is preferably received by the base platform code (3) which then terminates execution of the operating system and resident applications (6), if running, and begins execution of the boot code (1). Alternatively, the reset signal (4) may cause the base platform code (3) to terminate and reload the native suite (6) rather than execute the boot code (1).

As described above, whenever executed, the boot code (1) acquires and loads the base platform code (3). The base platform code may be provided to the set-top terminal over the cable network from the headend or, alternatively, may be factory-loaded along with the boot code. The base platform code is preferably stored in Flash memory (303) as shown in Fig. 3. The boot code (1) will either download the base platform code (3), for example, over an out-of-band channel from the headend or, if the base platform code was factory-loaded, identify the base platform code (3) in memory. The boot code (1) authenticates the base platform code (3) from whatever source it is obtained and then executes the base platform code (3).

The base platform code (3) then acquires the operating system and, preferably, the other objects of the native suite (6). The operating system and the other objects are downloaded from the headend over the cable network. The base platform code (3) will acquire the operating system and other objects when first executed or, while running, in response to an initialization message (4) from the system operator. The initialization message (4) maybe provided over the cable network. The operating system and resident applications (6) are then executed when the native suite is acquired, authorized and authenticated.

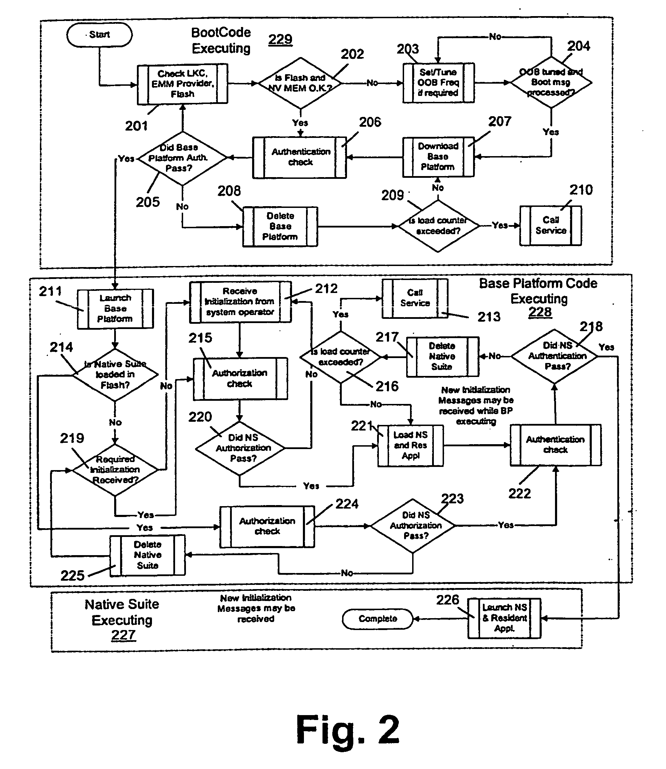

Fig. 2 is a flowchart providing a more detailed explanation of the initialization sequence according to the present invention. As shown in Fig. 2, when the set-top terminal is first powered, or an appropriate reset signal has been received, the boot code is executed (229). The boot code must first determine whether the set-top box has or must acquire the base platform code. To determine this, the boot code first checks the flash memory for the base platform code, the last known carrier (LKC) frequency of the control channel from the headend, and an Entitlement Management Message Provider Identification (201, 202).

If any of three following conditions are discovered, the boot code will conclude that it must acquire the base platform code and will hunt for the out-of-band channel or the in-band channel from which the base platform code can be obtained. The boot code seeks to acquire the base platform code if (1) the base platform code, last known carrier and EMM Provider ID are not stored in the Flash memory, (2) the base platform code in the Flash memory fails an authentication check or (3) non-volatile memory indicates that hunting for the control channel (likely an out-of-band channel) is required.

If the Flash check determines that a base platform code object exists, the boot code proceeds to execute that base platform object after appropriate authorization and authentication as described below. If both the base platform and the O/S are loaded in Flash, the boot code authorizes and authenticates the base platform and then launches the base platform and passes control of the set-top terminal thereto. The base platform object, in turn, authorizes and authenticates (A&A) the O/S. The authenticated O/S is then run and control passes to the O/S.

If the base platform code is not loaded in Flash memory, the boot code loads the base platform off of the out-of-band transport stream (203, 204, 207). However, before it is written to Flash memory, a successful authentication is required (206, 205). When the authenticated base platform code is executed, the boot code passes control to the base platform (211,228). If the base platform code fails the authentication check (205), the failed base platform code is deleted (208) and a counter is incremented (209) that tracks the number of attempts to acquire and authenticate a base platform code. If the counter is below a predetermined acceptable number of attempts, the base platform code is again downloaded (207). Alternatively, if the acceptable number of attempts to download the base platform code is exceeded, the set-top terminal may signal the headend for a service call (210).

Under the principles of the present invention, the boot code locates the base platform object using a boot code message or "bootcode_control_message" that is sent periodically on the out-of-band transport stream (204). Use of the bootcode_control_message will now be described in detail.

When the boot code determines the need to download the base platform object, it first hunts for the control channel. A table of possible carrier frequencies at which the control channel or channels are being broadcast is included in the boot code. These frequencies may be both in-band and out-of-band. The boot code will cause the set-top terminal to tune each of these frequencies in turn until the control channel is located and a carrier lock is obtained. If no control channel is received at a particular frequency for a predetermined period of time, the set-top terminal will tune the next frequency in the table. It is also possible to step through a frequency range or sweep a frequency range to find the control channel as opposed to stepping through a table of frequencies.

The control channel is a stream of data packets that can be received and used by the set-top terminal. In order to broadcast a number of different objects simultaneously, the headend will divide objects to be transmitted over the control channel into packets. The packets of the various objects being transmitted can then be interspersed or time-multiplexed together so that several objects are all transmitted essentially simultaneously. The packets for each particular object will have a common packet identifier or "PID." Thus, a set-top terminal can identify the packets for the object it is working to acquire. By acquiring all the packets with a particular PID, the complete object can then be reassembled by the set-top terminal from the set of packets with that particular PID.

According to the present invention, a set-top terminal can start anywhere in the progression to acquire an object and wrap around until all the necessary packets are downloaded. For example, the set-top terminal may load the first packet it receives with a PID X. That packet may be packet 50 of 100 marked by PID X. The terminal then continues to collect packets 51 to 100 with PID X, then 1 to 49. With all 100 packets obtained, the terminal can reassemble the packetized object.

The headend may need to broadcast a number of objects simultaneously because there may be different types or classes of set-top terminals in the population. Each class of set-top terminals may need a different version of, for example, the base platform code, the O/S or a resident application. Therefore, when the boot code is going to initialize the set-top terminal and must acquire the base platform code, the boot code must determine where to acquire the base platform appropriate to the set-top terminal on which it is running.

Thus, once the carrier lock is achieved and the control channel is being received, the boot code will begin collecting packets from the transport stream on the control channel that are identified with PID 1. PID 1 is dedicated to the conditional access message in the MPEG standard. The packets of PID 1 will provide the boot code running on the set-top terminal with a Conditional Access Table (CAT) of EMM descriptors each of which identifies a PID for a set of packets on the transport stream that constitute an EMM stream (Entitlement Management Message).

The boot code will begin with the first EMM descriptor and begin loading packets from the transport stream that are marked with the EMM PID given by the first EMM descriptor. The EMM PID packets being acquired will contain the boot code message of the present invention which, in turn, includes a platform identifier.

The boot code, which is factory-installed in the set-top terminal, will also include a platform identifier that is specific to the type of terminal in which the boot code is resident. When running, the boot code will attempt to match the platform identifier provided at the factory with the platform identifier from the boot code message of the EMM PID packets.

If no match is found, the boot code will select the next EMM descriptor in the CAT and check the packets of the EMM PID identified by the that EMM descriptor for a boot code message with a matching platform identifier. This continues until the matching platform identifier is found (203). It may be possible to search multiple EMM PID's simultaneously to reduce the EMM validation time and the time required to find the matching boot code message.

If all the EMM descriptors in the CAT of PID 1 are checked and no match is found for the platform identifier, the boot code will look for another control channel on another carrier frequency by returning to the table of carrier frequencies. When another frequency with a control channel is identified and locked, the boot code will extract PID 1 and repeat the process outlined above. This continues until a boot code message with a platform identifier matching the platform identifier of the boot code is found.

When the boot code finds a boot code message with a matching platform identifier, the boot code will extract a download PID (DL PID) specified in the matching boot code message. The download PID (DL PID) is the identifier for the packets that carry the code object, e.g., the base platform code object, that is appropriate for the type of set-top terminal with the platform identifier in the boot code message. The boot code can then download the base platform code object by acquiring the packets with the DL PID and reassembling the data in those packets into the base platform code.

As shown in Fig. 2, once the base platform code has been downloaded or identified as already resident in Flash memory, an authentication check (206) is performed to verify that the base platform code has been accurately and completely received and has not been altered by an unauthorized party.

If the base platform fails the authentication check, it is deleted (208). A load counter may then be checked to determine the number of times the set-top terminal has attempted to acquire a valid base platform code (209). If the counter exceeds a predetermined limit, the set-top terminal may signal the headend for a service call or may indicate the need to request a service call to the subscriber (210). If the load counter is not exceeded, the boot code will revert to the process described above and attempt again to download the base platform code (207).

Alternatively, if the base platform code is authenticated, it is then launched (211). The base platform code will then determine if the native suite, including the O/S, is loaded in the Flash memory (214). If it is not, the base platform code will seek to download the native suite.

With the base platform code running, the system operator may provide the set-top terminal with a set of "initialization messages" that provide, for example, channel maps, tables and EMM information (219, 212). These messages should be provided before the native suite is loaded. The initialization messages may instruct the set-top terminal where to acquire the native suite.

After the native suite has been downloaded, or is found already existing in Flash memory, an authorization check is performed on the native suite (215, 220, 224, 223). The download of the native suite will include an Object Conditional Access Message (OCAM) that is recorded by the set-top terminal. The authentication signature and authorization code for the native suite object are provided in the OCAM and used to authorize and authenticate the native suite in the manner described below.

If the authorization check is not successful, the native suite code will be deleted (225, 217) and the base platform code will not attempt to acquire the native suit (221) until the authorization passes. If the authorization check is successful, the native suite and any resident applications associated with it are loaded and an authentication check is performed (222). As before, if the authentication check fails, the downloaded code will be deleted (217) and a load counter or timer will be checked (216) to see if another attempt to download the code should be made or a service call signaled (213).

Alternatively, if the authentication check (222, 218) is successful, the native suite and any associated resident applications will be executed beginning with the O/S (226, 227). The base platform code performs the authorization and authentication on the O/S code. If the O/S is passes the authorization and authentication checks, the O/S is executed and control is transferred to the O/S. the BIOS (Basic Input/Output Software) may perform the authorization and authentication of the remainder of the native suite (215, 224, 222).

In summary, various portions of the boot process include an object authorization and authentication (A&A) process for newly acquired or located objects. The authorization check of the native suite is done within the base platform. The authorization and/or authentication of the base platform is, in turn performed by the boot code, which can only authenticate a base platform object. When running, the O/S of the native suite performs the authentication and authorization of subsequently loaded objects. These checks are required so that, given an interruption in power, etc., the authorization status of the terminal can be verified. If, at any point an authorization or authentication check fails, the object being checked is disabled.

Authentication is performed as follows. When a code object is broadcast over the cable network, it is associated with an authorization code and an authentication signature. For the base platform object, the code identifier is preferably given in an object_id field of the boot code message. The authentication signature is preferably given in an object_description field of the boot code message. For other objects, such as the O/S and the native suite, the authorization code and authentication signature are provided in an OCAM downloaded independent from the object

The authentication signature is computed mathematically using a specific algorithm with the code object itself as the input for the algorithm. The signature is then re-computed by the set-top terminal using the same algorithm and the downloaded code as input. If the signature computed by the set-top terminal matches the one transmitted with the code, the code can be implemented with confidence that its has been transmitted properly, without inadvertent or malicious alteration.

Fig. 3 illustrates four memory units of a set-top terminal (300) according to the present invention. A read-only memory unit (ROM) (301) contains the boot code (302). A flash memory unit (303) contains the base platform code (304) and the O/S object (306). Aside from these objects, additional flash memory is available (305). Two stack pointers (307, 308) designate absolute locations in the Flash memory (303) for the base platform code (304, 308) and the O/S (306, 307). It is important that these two objects may be absolutely located in Flash (303).

A non-volatile memory unit (310) preferably has both a managed and a non-managed segment. The base platform code (304) may store parameters and other data in the either portion of the non-volatile memory unit (310).

Finally, a random access memory unit (RAM) (309) is provided. Downloaded objects such as the base platform code, the O/S, etc. may be stored in the RAM (309) until authenticated. Once authorization and authentication are successfully completed, the objects may be transferred from the RAM (309) to the Flash memory unit (303) for long-term storage.

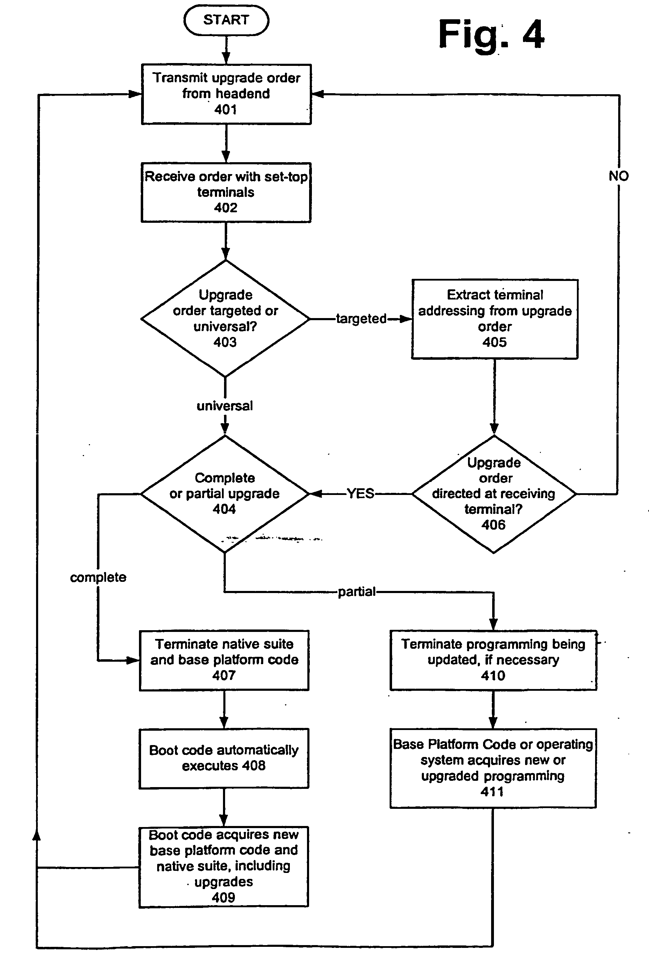

The present invention provides for two basic ways to upgrade the basic platform in a population of set-top terminals once those terminals have been placed in full service. As illustrated in Fig. 4, these two methods of upgrade are (1) a universal upgrade of the entire population (i.e., the entire population tuned to a particular control stream) and (2) a targeted upgrade of a subset or subsets of the population. Both methods may make use of the boot code to perform the upgrade.

As shown in Fig. 4, the system operator transmits an upgrade order from the cable headend to the population of set-top terminals receiving the signal from that headend over the cable network (401). All the set-top terminals tuned to the control channel on which the upgrade order is broadcast will receive the order (402).

Each set-top terminal will first determine if the upgrade order is universal or targeted (403). A universal upgrade order will cause all the set-top terminals receiving it to effect the specified upgrade. If the upgrade order is universal, each set-top terminal will then determine if the order is for a complete or partial upgrade (404). A complete upgrade requires the set-top terminal to upgrade all programming except the immutable boot code, i.e., the base platform object and the native suite, including the operating system object and the resident applications. A partial upgrade merely requires the set-top terminal to replace one or more elements of the native suite, i.e. the operating system object and/or one or more resident applications.

If a complete upgrade is signaled, the set-top terminal will terminate the native suite and the base platform code (407). The set-top terminal may also delete the terminated objects. In the absence of other executing programming, the set-top terminal will automatically re-execute the boot code from ROM. The boot code then assumes control and performs the initialization procedure outlined above, including replacing the base platform and native suite with upgraded code objects downloaded over the cable network as described above.

If the upgrade ordered is partial rather than complete, one or more elements of the native suite are to be replaced or a new element is to be added to the native suite. If existing elements of the native suite are to be replaced, the set-top terminal will terminate, and may delete, those specified elements (410).

If the operating system is being replaced, the base platform code will assume control of the terminal upon termination of the existing operating system. The base platform code will then load a new, upgraded operating system from the cable network as described above (411). This may also include reloading and upgrading some or all of the resident applications of the native suite.

Alternatively, if one or more resident applications are being replaced or a new resident application is being added, the operating system, rather than the base platform code, may control the downloading, authentication and authorization of the new code objects as described above.

A targeted upgrade applies to a single terminal or a small group of terminals on a given control channel. Each terminal has a specific single-cast address and can, therefore, be addressed by the headend and instructed to completely or partially upgrade its programming. Alternatively, each terminal has one or more multi-cast addresses that are shared by other terminals in the population. Four such multi-cast addresses for each terminal are preferred. With a multi-cast address, the headend can signal a code upgrade or re-initialization for a specific class of terminals that share that particular multi-cast address.

As shown in Fig. 4, after a targeted upgrade order has been received, the set-top terminal will extract the terminal addressing information from the targeted upgrade order (405). If the addressing information from the upgrade order matches the single-cast or any multi-cast address of the receiving set-top terminal, that terminal will accept and implement the upgrade order (406). The terminal then determines if the upgrade order is complete or partial (404) and the upgrade process proceeds as outlined above.

In this way, the system operator can very flexibly and effectively control the upgrading of programming in the population of set-top terminals connected to the cable television system.

The preceding description has been presented only to illustrate and describe the invention. It is not intended to be exhaustive or to limit the invention to any precise form disclosed. Many modifications and variations are possible in light of the above teaching.

The preferred embodiment was chosen and described in order to best explain the principles of the invention and its practical application. The preceding description is intended to enable others skilled in the art to best utilize the invention in various embodiments and with various modifications as are suited to the particular use contemplated, the invention being defined in the appended claims.

## Claims

1. A method for controlling an upgrade of programming in at least one set-top terminal (300) connected to a cable television system, a set-top terminal (300) of said at least one set-top terminal (300) having a hardware configuration, the method comprising:
storing boot code (302) within said set-top terminal (300);
transmitting a plurality of base codes within a transport stream signal (322) of said cable television system;
identifying a set-top terminal specific base code (304), said boot code (302) identifying said specific base code (304) from said plurality of base codes;
retrieving said specific base code (304), said set-top terminal (300) retrieving said specific base code (304) from said plurality of base codes based upon said hardware configuration;
wherein said specific base code (304) allows a user of said set-top terminal (300) to watch broadcasts using said signal (322) from said cable television system;
transmitting one of an operating system (O/S) and a resident application (6) within said transport stream signal (322), said television system transmitting said one of said operating system (O/S) and said resident application (6); and
loading said one of said operating system (O/S) and said resident application (6) into said set-top terminal (300), said base code (304) being executed to control the loading of said one of said operating system (O/S) and said resident application (6).

2. The method of claim 1, wherein a plurality of set-top terminals (300) are connected to said transport stream signal (322) from said cable television system, each set-top terminal (300) of said plurality of set-top terminals (300) being adapted to perform said step of retrieving said specific base code (304) of said plurality of base codes, and said step of retrieving said one of said operating system (O/S) and said resident application (6).

3. The method of claim 1, further comprising:
authenticating said specific base code (304), said boot code (302) authenticating said specific base code (304).

4. The method of claim 1, further comprising:
wherein execution of said boot code (302) is terminated upon executing said specific base code (304).

5. The method of claim 1, wherein said transport stream signal (322) is an out-of-band transport stream, said plurality of base codes being transmitted on said out-of-band transport stream.

6. The method of claim 1, wherein said transport stream signal (322) is an in-band transport stream, said plurality of base codes being transmitted on said in-band transport stream.

7. A system for controlling an upgrade of programming in at least one set-top terminal (300) connected to a cable television system, a set-top terminal (300) of said at least one set-top terminal (300) having a hardware configuration and boot code, said hardware configuration including a processor (321), said cable television system having a transmitter, the system for controlling an upgrade of programming comprising:
boot code (302), base code (304), and one of an operating system (O/S) and a resident application (6),
wherein said cable television system comprises means for transmitting a plurality of base codes within said transport stream signal (322), and for transmitting one of said operating system (O/S) and said resident application (6) within said transport stream signal (322);
wherein said set-top terminal comprises means for storing said boot code (302) within said set-top terminal (300), and means for executing said boot code to identify a set-top terminal specific base code (304) from said plurality of base codes for receipt by said set-top terminal (300) and to retrieve said specific base code (304) from said plurality of base codes, said specific base code (304) being retrieved by said set-top terminal (300) based upon said hardware configuration;
and wherein said set-top terminal further comprises means for executing said specific base code (304) to allow a user of said set-top terminal (300) to watch broadcasts using said signal (322) from said cable television system and to control the loading of said one of said operating system (O/S) and said resident application (6) into said set-top terminal (300).

8. The system for controlling an upgrade of programming of claim 7, wherein a plurality of set-top terminals (300) are connected to said transport stream signal (322) from said cable television system, each set-top terminal (300) of said plurality of set-top terminals (300) being adapted to perform said step of retrieving said specific base code (304) of said plurality of base codes, and said step of retrieving said one of said operating system (O/S) and said resident application (6).

9. The system for controlling an upgrade of programming of claim 7, wherein said boot code (302) authenticates said specific base code (304).

10. The system for controlling an upgrade of programming of claim 7, wherein execution of said boot code (302) is terminated upon execution of said specific base code (304).

11. The system for controlling an upgrade of programming of claim 7, wherein said transport stream signal (322) is an out-of-band transport stream, said plurality of base codes being transmitted on said out-of-band transport stream.

12. The system for controlling an upgrade of programming of claim 7, wherein said transport stream signal (322) is an in-band transport stream, said plurality of base codes being transmitted on said in-band transport stream.

## Patentansprüche

1. Ein Verfahren zum Steuern einer Hochrüstung von Programmierung in mindestens einem Set-Top-Terminal (300), das mit einem Kabelfernsehsystem verbunden ist, wobei ein Set-Top-Terminal (300) des mindestens einen Set-Top-Terminals (300) eine Hardwarekonfiguration aufweist, wobei das Verfahren Folgendes beinhaltet:
Speichern eines Urladecodes (302) innerhalb des Set-Top-Terminals (300);
Übertragen einer Vielzahl von Basiscodes innerhalb eines Transportstromsignals (322) des Kabelfernsehsystems;
Erkennen eines dem Set-Top-Terminal spezifischen Basiscodes (304), wobei der Urladecode (302) den spezifischen Basiscode (304) aus der Vielzahl von Basiscodes erkennt;
Wiedergewinnen des spezifischen Basiscodes (304), wobei das Set-Top-Terminal (300) den spezifischen Basiscode (304) aus der Vielzahl von Basiscodes basierend auf der Hardwarekonfiguration wiedergewinnt;
wobei der spezifische Basiscode (304) es einem Benutzer des Set-Top-Terminals (300) ermöglicht, Rundfunksendungen unter Verwendung des Signals (322) von dem Kabelfernsehsystem anzusehen;
Übertragen eines von einem Betriebssystem (BS) und einer residenten Anwendung (6) innerhalb des Transportstromsignals (322), wobei das Fernsehsystem den einen von dem Betriebssystem (BS) und der residenten Anwendung (6) überträgt; und
Laden des einen von dem Betriebssystem (BS) und der residenten Anwendung (6) in ein Set-Top-Terminal (300), wobei der Basiscode (304) ausgeführt wird, um das Laden des einen von dem Betriebssystem (BS) und der residenten Anwendung (6) zu steuern.

2. Verfahren gemäß Anspruch 1, wobei eine Vielzahl von Set-Top-Terminals (300) mit dem Transportstromsignal (322) von dem Kabelfernsehsystem verbunden ist, wobei jedes Set-Top-Terminal (300) der Vielzahl von Set-Top-Terminals (300) angepasst ist, um den Schritt des Wiedergewinnens des spezifischen Basiscodes (304) der Vielzahl von Basiscodes und den Schritt des Wiedergewinnens des einen von dem Betriebssystem (BS) und der residenten Anwendung (6) durchzuführen.

3. Verfahren gemäß Anspruch 1, das ferner Folgendes beinhaltet:
Authentifizieren des spezifischen Basiscodes (304), wobei der Urladecode (302) den spezifischen Basiscode (304) authentifiziert.

4. Verfahren gemäß Anspruch 1, das ferner Folgendes beinhaltet:
wobei das Ausführen des Urladecodes (302) beim Ausführen des spezifischen Basiscodes (304) beendet wird.

5. Verfahren gemäß Anspruch 1, wobei das Transportstromsignal (322) ein Außerbandtransportstrom ist, wobei die Vielzahl von Basiscodes auf dem Außerbandtransportstrom übertragen wird.

6. Verfahren gemäß Anspruch 1, wobei das Transportstromsignal (322) ein Inbandtransportstrom ist, wobei die Vielzahl von Basiscodes auf dem Inbandtransportstrom übertragen wird.

7. Ein System zum Steuern einer Hochrüstung von Programmierung in mindestens einem Set-Top-Terminal (300), das mit einem Kabelfernsehsystem verbunden ist, wobei ein Set-Top-Terminal (300) des mindestens einen Set-Top-Terminals (300) eine Hardwarekonfiguration und einen Urladecode aufweist, wobei die Hardwarekonfiguration einen Prozessor (321) umfasst, wobei das Kabelfernsehsystem einen Sender aufweist, wobei das System zum Steuern einer Hochrüstung einer Programmierung Folgendes beinhaltet:
Urladecode (302), Basiscode (304) und eines von einem Betriebssystem (BS) und einer residenten Anwendung (6),
wobei das Kabelfernsehsystem ein Mittel zum Übertragen einer Vielzahl von Basiscodes innerhalb des Transportstromsignals (322) und zum Übertragen von einem von dem Betriebssystem (BS) und der residenten Anwendung (6) innerhalb des Transportstromsignals (322) beinhaltet;
wobei das Set-Top-Terminal Mittel zum Speichern des Urladecodes (302) innerhalb des Set-Top-Terminals (300) und Mittel zum Ausführen des Urladecodes beinhaltet, um aus der Vielzahl von Basiscodes einen dem Set-Top-Terminal spezifischen Basiscode (304), der von dem Set-Top-Terminal (300) empfangen werden soll, zu erkennen und den spezifischen Basiscode (304) aus der Vielzahl von Basiscodes wiederzugewinnen, wobei der spezifische Basiscode (304) durch das Set-Top-Terminal (300) basierend auf der Hardwarekonfiguration wiedergewonnen wird;
und wobei das Set-Top-Terminal ferner Mittel zum Ausführen des spezifischen Basiscodes (304) beinhaltet, um es einem Benutzer des Set-Top-Terminals (300) zu ermöglichen, Rundfunksendungen unter Verwendung des Signals (322) von dem Kabelfernsehsystem anzusehen und das Laden des einen von dem Betriebssystem (BS) und der residenten Anwendung (6) in das Set-Top-Terminal (300) zu steuern.

8. System zum Steuern einer Hochrüstung von Programmierung gemäß Anspruch 7, wobei eine Vielzahl von Set-Top-Terminals (300) mit dem Transportstromsignal (322) von dem Kabelfernsehsystem verbunden ist, wobei jedes Set-Top-Terminal (300) der Vielzahl von Set-Top-Terminals (300) angepasst ist, um den Schritt des Wiedergewinnens des spezifischen Basiscodes (304) der Vielzahl von Basiscodes und den Schritt des Wiedergewinnens des einen von dem Betriebssystem (BS) und der residenten Anwendung (6) durchzuführen.

9. System zum Steuern einer Hochrüstung von Programmierung gemäß Anspruch 7, wobei der Urladecode (302) den spezifischen Basiscode (304) authentifiziert.

10. System zum Steuern einer Hochrüstung von Programmierung gemäß Anspruch 7, wobei das Ausführen des Urladecodes (302) beim Ausführen des spezifischen Basiscodes (304) beendet wird.

11. System zum Steuern einer Hochrüstung von Programmierung gemäß Anspruch 7, wobei das Transportstromsignal (322) ein Außerbandtransportstrom ist, wobei die Vielzahl von Basiscodes auf dem Außerbandtransportstrom übertragen wird.

12. System zum Steuern einer Hochrüstung von Programmierung gemäß Anspruch 7, wobei das Transportstromsignal (322) ein Inbandtransportstrom ist, wobei die Vielzahl von Basiscodes auf dem Inbandtransportstrom übertragen wird.

## Revendications

1. Un procédé destiné à contrôler une mise à niveau de programmation dans au moins un terminal set-top (300) raccordé à un système de télévision par câble, un terminal set-top (300) dudit au moins un terminal set-top (300) ayant une configuration de matériel, le procédé comportant :
stocker un code d'amorçage (302) au sein dudit terminal set-top (300) ;
transmettre une pluralité de codes de base au sein d'un signal de flot de transport (322) dudit système de télévision par câble ;
identifier un code de base spécifique de terminal set-top (304), ledit code d'amorçage (302) identifiant ledit code de base spécifique (304) parmi ladite pluralité de codes de base ;
récupérer ledit code de base spécifique (304), ledit terminal set-top (300) récupérant ledit code de base spécifique (304) de ladite pluralité de codes de base sur la base de ladite configuration de matériel ;
dans lequel ledit code de base spécifique (304) permet à un utilisateur dudit terminal set-top (300) de regarder des émissions en utilisant ledit signal (322) provenant dudit système de télévision par câble ;
transmettre un élément parmi un système d'exploitation (S/E) et une application résidente (6) au sein dudit signal de flot de transport (322), ledit système de télévision transmettant ledit un élément parmi ledit système d'exploitation (SIE) et ladite application résidente (6) ; et
charger ledit un élément parmi ledit système d'exploitation (S/E) et ladite application résidente (6) dans ledit terminal set-top (300), ledit code de base (304) étant exécuté pour contrôler le chargement dudit un élément parmi ledit système d'exploitation (SIE) et ladite application résidente (6).

2. Le procédé de la revendication 1, dans lequel une pluralité de terminaux set-top (300) sont raccordés audit signal de flot de transport (322) provenant dudit système de télévision par câble, chaque terminal set-top (300) de ladite pluralité de terminaux set-top (300) étant adapté pour effectuer ladite étape de récupération dudit code de base spécifique (304) de ladite pluralité de codes de base, et ladite étape de récupération dudit un élément parmi ledit système d'exploitation (S/E) et ladite application résidente (6).

3. Le procédé de la revendication 1, comportant de plus :
authentifier ledit code de base spécifique (304), ledit code d'amorçage (302) authentifiant ledit code de base spécifique (304).

4. Le procédé de la revendication 1, comportant de plus :
dans lequel il est mis fin à l'exécution dudit code d'amorçage (302) à l'exécution dudit code de base spécifique (304).

5. Le procédé de la revendication 1, dans lequel ledit signal de flot de transport (322) est un flot de transport hors-bande, ladite pluralité de codes de base étant transmis sur ledit flot de transport hors-bande.

6. Le procédé de la revendication 1, dans lequel ledit signal de flot de transport (322) est un flot de transport intra-bande, ladite pluralité de codes de base étant transmis sur ledit flot de transport intra-bande.

7. Un système destiné à contrôler une mise à niveau de programmation dans au moins un terminal set-top (300) raccordé à un système de télévision par câble, un terminal set-top (300) dudit au moins un terminal set-top (300) ayant une configuration de matériel et un code d'amorçage, ladite configuration de matériel comprenant un processeur (321), ledit système de télévision par câble ayant un émetteur, le système destiné à contrôler une mise à niveau de programmation comportant :
un code d'amorçage (302), un code de base (304), et un élément parmi un système d'exploitation (SIE) et une application résidente (6),
dans lequel ledit système de télévision par câble comporte un moyen destiné à transmettre une pluralité de codes de base au sein dudit signal de flot de transport (322), et destiné à transmettre un élément parmi ledit système d'exploitation (SIE) et ladite application résidente (6) au sein dudit signal de flot de transport (322) ;
dans lequel ledit terminal set-top comporte un moyen destiné à stocker ledit code d'amorçage (302) au sein dudit terminal set-top (300), et un moyen destiné à exécuter ledit code d'amorçage pour identifier un code de base spécifique de terminal set-top (304) parmi ladite pluralité de codes de base pour qu'il soit reçu par ledit terminal set-top (300) et pour récupérer ledit code de base spécifique (304) de ladite pluralité de codes de base, ledit code de base spécifique (304) étant récupéré par ledit terminal set-top (300) sur la base de ladite configuration de matériel ;
et dans lequel ledit terminal set-top comporte de plus un moyen destiné à exécuter ledit code de base spécifique (304) pour permettre à un utilisateur dudit terminal set-top (300) de regarder des émissions en utilisant ledit signal (322) provenant dudit système de télévision par câble et pour contrôler le chargement dudit un élément parmi ledit système d'exploitation (SIE) et ladite application résidente (6) dans ledit terminal set-top (300).

8. Le système destiné à contrôler une mise à niveau de programmation de la revendication 7, dans lequel une pluralité de terminaux set-top (300) sont raccordés audit signal de flot de transport (322) provenant dudit système de télévision par câble, chaque terminal set-top (300) de ladite pluralité de terminaux set-top (300) étant adapté pour effectuer ladite étape de récupération dudit code de base spécifique (304) de ladite pluralité de codes de base, et ladite étape de récupération dudit un élément parmi ledit système d'exploitation (S/E) et ladite application résidente (6).

9. Le système destiné à contrôler une mise à niveau de programmation de la revendication 7, dans lequel ledit code d'amorçage (302) authentifie ledit code de base spécifique (304).

10. Le système destiné à contrôler une mise à niveau de programmation de la revendication 7, dans lequel il est mis fin à l'exécution dudit code d'amorçage (302) à l'exécution dudit code de base spécifique (304).

11. Le système destiné à contrôler une mise à niveau de programmation de la revendication 7, dans lequel ledit signal de flot de transport (322) est un flot de transport hors-bande, ladite pluralité de codes de base étant transmis sur ledit flot de transport hors-bande.

12. Le système destiné à contrôler une mise à niveau de programmation de la revendication 7, dans lequel ledit signal de flot de transport (322) est un flot de transport intra-bande, ladite pluralité de codes de base étant transmis sur ledit flot de transport intra-bande.
